# EUROPEAN PATENT SPECIFICATION

(11) **EP 2 853 109 B1**
(45) Date of publication and mention of the grant of the patent: **27.02.2019**
(21) Application number: 13793535.9
(22) Date of filing: 22.05.2013
(51) Int. Cl.: H04W 36/00, H04W 76/19

(54) **METHOD FOR DETECTING CAUSE OF RADIO LINK FAILURE OR HANDOVER FAILURE**
VERFAHREN ZUR ERKENNUNG DER URSACHE VON FUNKVERBINDUNGSFEHLERN ODER WEITERLEITUNGSFEHLERN
PROCÉDÉ DE DÉTECTION DE CAUSE DE DÉFAILLANCE DE LIAISON RADIO OU D'ÉCHEC DE TRANSFERT INTERCELLULAIRE

(30) Priority: 22.05.2012 CN 201210159909
(43) Date of publication of application: 01.04.2015
(73) Proprietor: Samsung Electronics Co., Ltd., Suwon-si, Gyeonggi-do 443-742 (KR)
(72) Inventor: XU, Lixiang, Beijing 100125 (CN); WANG, Hong, Beijing 100125 (CN); LIANG, Huarui, Beijing 100125 (CN); KE, Xiaowan, Beijing 100125 (CN)
(74) Representative: HGF Limited
(86) International application number: PCT/KR2013/004489
(87) International publication number: WO 2013/176483

(56) References cited:
- WO-A1-2010/080848
- KR-A- 20100 023 954
- US-A1- 2009 181 678
- US-A1- 2009 196 254
- US-A1- 2011 086 635
- NOKIA SIEMENS NETWORKS: "HO type identifier for failure or UE context identification", 3GPP DRAFT; R3-121224 SON_MRO_HOID, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Prague, Czech; 20120521 - 20120525, 11 May 2012 (2012-05-11), XP050611025, [retrieved on 2012-05-11]
- ERICSSON: "Analisys and description of a solution for HetNet MRO", 3GPP DRAFT; R3-121297 HETNET-MRO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Prague, Czech Republic; 20120521 - 20120525, 12 May 2012 (2012-05-12), XP050611305, [retrieved on 2012-05-12]
- HUAWEI: "HetNet MRO: UE context identification", 3GPP DRAFT; R3-121055 UE CONTEXT IDENTIFICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Prague; 20120521 - 20120525, 11 May 2012 (2012-05-11), XP050611113, [retrieved on 2012-05-11]
- NEW POSTCOM: "Discussions on mobility configuration storage", 3GPP DRAFT; R3-121109_DISCUSSIONS ON MOBILITY CONFIGURATION STORAGE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Prague, Czech Republic; 20120521 - 20120525, 12 May 2012 (2012-05-12), XP050611220, [retrieved on 2012-05-12]
- NOKIA SIEMENS NETWORKS: "RLF Reports for Mobility Robustness Optimization", 3GPP DRAFT; R3-091357 SON_MRO_ENCHANCEDRLF, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090429, 29 April 2009 (2009-04-29), XP050341693, [retrieved on 2009-04-29]

## Description

### Technical Field

The present disclosure relates to mobile communication technology, and more particularly to a method for detecting a cause of radio link failure (RLF) or handover failure.

### Background Art

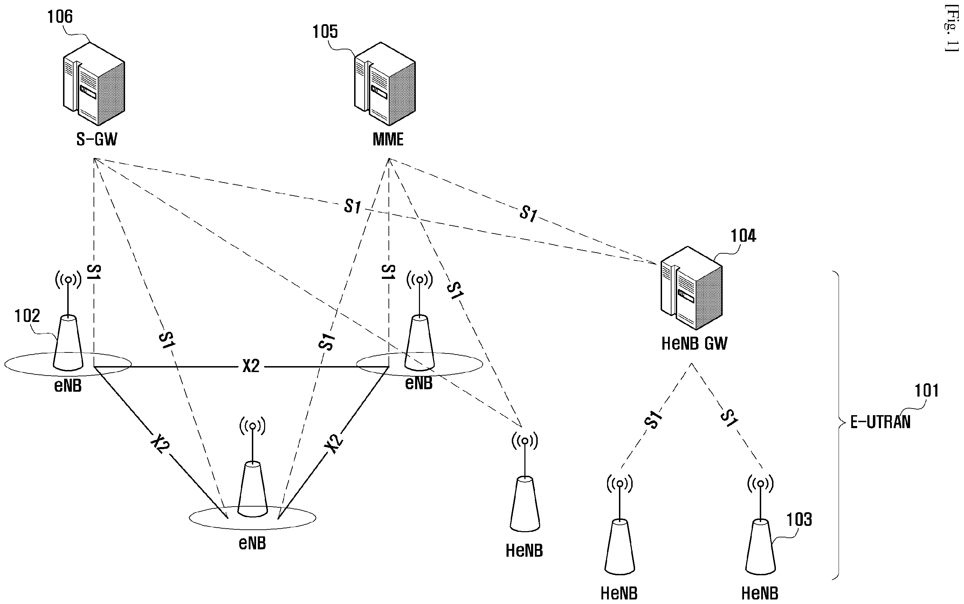

Along with the development of communication technologies, the mobile communication system has evolved into a System Architecture Evolution (SAE) system. FIG. 1 is a schematic diagram illustrating a structure of a SAE system. Referring to FIG. 1, the SAE system includes an Evolved Universal Terrestrial Radio Access Network (E-UTRAN) 101 and a core network containing a Mobile Management Entity (MME) 105 and a Serving Gateway (S-GW) 106. The E-UTRAN 101 is configured to connect a User Equipment (UE) to the core network, and includes more than one evolved Node B (eNB) 102 and more than one Home eNB (HeNB) 103, and further includes an optional HeNB GateWay (HeNB GW) 104. The MME 105 and the S-GW 106 may be integrated in one module or may be implemented separately. An eNB 102 is connected with another eNB 102 via an X2 interface, and is connected with the MME 105 and the S-GW 106 respectively via an S1 interface. A HeNB 103 is connected with the MME 105 and the S-GW 106 respectively via an S1 interface; or is connected with the optional HeNB GW 104 via an S1 interface, and the HeNB GW 104 is then connected with the MME 105 and the S-GW 106 respectively via an S1 interface.

At an early stage of SAE system deployment or during an SAE system operating stage, it may take a large number of human and material resources to optimize parameters of the SAE system, especially radio parameters, so as to ensure good coverage and capacity, mobile robustness, load balance when moving, and sufficient access speed of the UE in the SAE system. To save the manual and material resources consumed during the SAE system operation process, a method for self-optimizing the SAE system is currently proposed. During a self-optimization process, configurations of the eNB or HeNB are optimized according to a current state of the SAE system. Both the eNB and the HeNB may both be referred to as an eNB for convenience in explanation in the following description of the method for self-optimizing the SAE system.

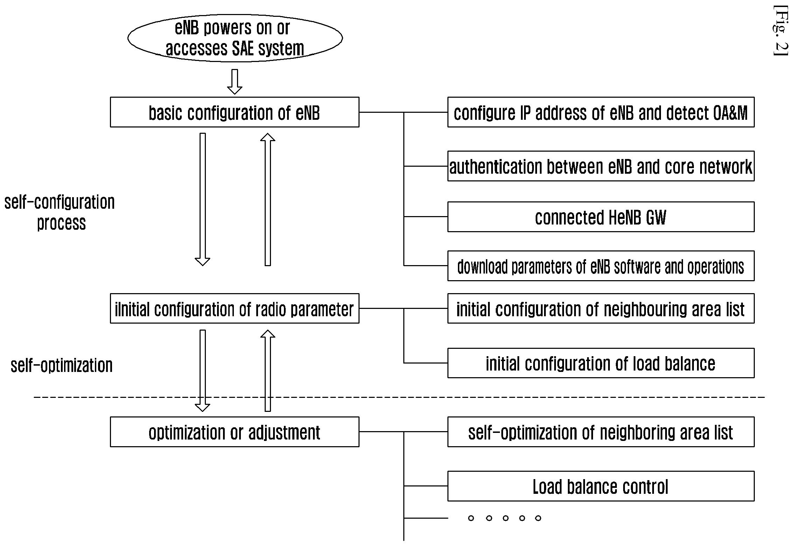

FIG. 2 is a schematic diagram illustrating a basic principle for self-optimizing a SAE system. Referring to FIG. 2, after the eNB turns on power or accesses the SAE system, a self-configuring process can be started. The self-configuring process includes basic configuration and initial radio parameter configuration for the eNB. The basic configuration for the eNB includes configuring an Internet Protocol (IP) address of the eNB and detecting Operation Administration and Maintenance (OAM), authenticating between the eNB and the core network, detecting the HeNB GW that the eNB belongs to when the eNB is the HeNB, and downloading parameters of software and operations of the eNB for self-configuration. The initial radio parameter configuration is implemented according to experience or simulation. Because performance of each eNB in the SAE system will be affected by the environment of an area where the eNB is located, the eNB initializes the radio parameter configuration according to the environment of the area where the eNB is located. Specifically, the eNB performs the initial configuration for a neighboring area list and the initial configuration for the load balance. After the self-configuring process, many parameters configured by the eNB are not optimized.

Therefore, in order to increase the performance of the SAE system, the configuration of the eNB should be optimized or adjusted, which is also referred to as self-optimization of the mobile communication system. The optimization or adjustment of the configuration of the eNB may be implemented by the eNB under the control of the OAM in the background. Specifically, there may be a standardized interface between the eNB and the OAM, and the OAM will transmit a parameter to be optimized to the eNB (i.e., eNB or HeNB) via the standardized interface, and then the eNB optimizes the parameter in the self-configuration according to the parameter to be optimized. In addition, the configuration of the eNB can also be optimized or adjusted by the eNB itself, i.e., the eNB detects and obtains performance to be optimized, and then optimizes or adjusts its parameter corresponding to the performance. Optimizing or adjusting the configuration of the eNB may include self-optimizing a neighboring area list, self-optimizing the coverage and capacity, self-optimizing the mobile robustness, self-optimizing the load balance, self-optimizing a Random Access Channel (RACH) parameter, and the like.

Currently, basic principles of release 10 mobility robustness self-optimization are: when the UE re-enters a connection mode after encountering the RLF or the handover failure, the UE instructs the network that there is an available RLF report, the network sends a message to the UE to request for the RLF report; the RLF report sent by the UE contains E-UTRAN Cell Global Identifier (ECGI) of the last cell servicing the UE, ECGI of a cell trying to be re-established, ECGI of a cell which triggers the handover process for the last time, time between triggering the handover for the last time and connection failure, a cause of the connection failure being RLF or handover failure and radio measurement; the base station 1 which obtains the RLF report of the UE forwards the RLF report obtained from the UE to the base station 2 where the last cell servicing the UE is located; the last base station servicing the UE determines whether the cause of the RLF or handover failure is a too early handover, a too late handover, handover to a wrong cell or a coverage hole; if it is a too early handover or handover to a wrong cell, then the base station sends a too early handover or handover to a wrong cell message to the base station 3 which triggers the too early handover or handover to a wrong cell message.

3GPP Draft R3-121224 ("HO type identifier for failure or UE context identification", Nokia Siemens Networks) discusses RLF reports and HO reports, and which way to select for context identification in the context of a failure. 3GPP Draft R3-121297 ("Analysis and description of a solution for HetNet MRO", Ericsson) discusses seven different solutions for providing a complete end to end MRO solution.

### Disclosure of Invention

### Technical Problem

In Rel-11, when 3GPP needs to support deployment of heterogeneous network (HetNet), encountered problems include:
a) In a process that a UE is handed over from a macro cell to a pico cell, due to high speed movement of the UE, the UE fails to access a target cell, or when the UE is just successfully handed over to the target pico cell, an RLF failure occurs and the UE successfully establishes a connection in a source cell or another macro cell. For UEs moving at low speed, if it is determined that such a situation occurs to a plurality of UEs, handover triggering of the macro cell and the pico cell is needed to be adjusted. If such a situation occurs to a UE moving at high speed, it is only needed to adjust handover triggering of the UE moving at high speed.
b) In case of cell range expansion (CRE), handover criteria for UE in macro cells may be different. If the UE is just successfully handed over to the pico cell, an RLF failure occurs and the UE successfully accesses a source cell or another cell, since the handover criteria for UE in macro cells may be different, the cause of the failure may be handover too early or handover to a wrong cell; but according to the related art, after a source cell (a cell which triggers a handover to the pico cell) receives a handover report, since the source cell cannot correctly identify which handover criteria is wrong, thus, the source cell cannot correctly determine the cause of the failure.

In order to solve the above problems, some example solutions are provided below.

The first scheme: the UE carries a cell radio network temporary identifier (CRNTI) of the UE in a last cell servicing the UE and short information of Media Access Control used for data Integrity of signaling messages (short MAC-I). A base station which receives the RLF report sends the RLF report to a last base station serving the UE, the last base station serving the UE finds context of the UE according to the CRNTI and the short MAC-I, and determines the cause of the RLF or handover failure according to information in the context of the UE and information in the RLF report.

The second scheme: handover is classified, such as high-speed UE, UE using CRE, and so on; a source base station sends the classification (HO Token) to the UE. Then, the source base station obtains a HO Token from the RLF of the UE, and further determines the cause of the RLF or handover failure according to the HO Token.

The third scheme: handover is classified, such as high-speed UE, UE using CRE, and so on; a source base station sends the classification (HO Token) to the UE. The UE sends the HO Token in the RLF report of the UE to a re-accessed base station, and the re-accessed base station further determines the cause of the RLF or handover failure according to the HO Token or the RLF report of the UE.

The following problem is associated with the first scheme: When this method is used in a situation that a handover from a macro cell to a pico cell fails, this method can work. But when this method is used in a situation that a handover from a macro cell to a pico cell is successful and that an RLF failure occurs when the handover is just successful and the UE successfully establishes a connection in a source macro cell or another macro cell, since the last cell serving the UE is the pico cell, thus, the C-RNTI (Cell - Radio Network Temporary Identifier) and the shortMACI reported by the UE are information of the UE in the pico cell. After the context of the UE is found according to the C-RNTI and the shortMACI reported by the UE, information of the UE in the source macro cannot be obtained, for example, whether there is CRE configuration in the source macro cell, thus, the above problems a) and b) cannot be solved.

The following two problems are associated with the second scheme.

The first problem: Handover triggering needs to consider many factors, such as measurement configuration, measurement result, method for eliminating the interference, load balancing and so on; it is difficult to simply use a classification to represent a handover type, a result of a judgment based on the classification will appear error and deviation.

The second problem: According to an existing mobility robustness optimization detection method, it is a base station where a last cell serving the UE is located to determine the cause of the RLF or handover failure. For the situation that the UE is successfully handed over from a macro cell to a pico cell and that an RLF failure occurs when the handover is just successful and the UE successfully establishes a connection in a source macro cell or another macro cell, since the HO Token is for macro eNB, the pico cell which last serves the UE cannot obtain parameters corresponding to the HO Token of the macro cell; since a pico base station will send a handover report to the source base station after the pico base station has determined the cause of the RLF or the handover failure according to the RLF report of the UE, and the source base station needs to determine the cause of the failure again according to the received HO Token, thus, the determination of the target pico base station will have no meaning, and the judgment node is different from an existing judgment node for the cause of the RLF or handover failure.

The following problem is associated with the third scheme: If the base station re-accessed by the UE is not a base station which last triggers handover, the base station re-accessed by the UE cannot correctly understand the meaning of the HO token, and thus cannot make a correct judgment. Meanwhile, the problems in the second scheme also exist in the third scheme.

It can be seen that the related art cannot solve the problems encountered in case of the deployment of heterogeneous network (HetNet).

### Solution to Problem

To address the above-discussed deficiencies of the prior art, it is a primary object to provide methods for detecting a cause of radio link failure (RLF) or handover failure, to avoid a base station from saving context information of a UE which has moved away, thereby improving accuracy of determining a cause of the RLF or handover failure.

The present disclosure also provides other methods for detecting a cause of radio link failure (RLF) or handover failure, so that the network can find correct UE context so as to learn handover or mobility configuration information of the UE according to the UE context, to avoid a base station from saving context information of a UE which has moved away, thereby correctly determining the cause why the UE encounters RLF or handover failure so as to improve efficiency of MRO and improve system performance.

In order to achieve the above objects, the present disclosure provides a method according to claim 1.

The present disclosure further provides a system for detecting a cause of a handover failure, according to claim 6.

The present disclosure further provides a system for detecting a cause of handover failure, according to claim 11.

### Advantageous Effects of Invention

In sum, in the first method for detecting cause of radio link failure (RLF) or handover failure provided in the present disclosure, the mobility or handover information of the UE in the source cell is sent to the target base station, when the target base station receives the RLF report of the UE, the target base station can determine cause of a failure according to the RLF report of the UE and the mobility or handover information of the UE in the source cell, so that the base station can correctly determine the cause why the UE encounters the RLF or handover failure, to avoid the base station from saving context information of the UE which has moved away, and to improve efficiency of MRO and improve system performance. Meanwhile, this method is compatible with existing technology, and can avoid the problem that two nodes detect the cause of failure.

The second method for detecting cause of radio link failure (RLF) or handover failure provided in the present disclosure can avoid a base station from saving context information of a UE which has moved away, and improve efficiency of MRO and improve system performance.

The third method and the fourth method provided in the present disclosure can make the network find correct UE context so as to learn handover or mobile configuration information of the UE according to the UE context, thereby correctly determining the cause why the UE encounters RLF or handover failure so as to improve efficiency of MRO and improve system performance.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### Brief Description of Drawings

For a more complete understanding of the present disclosure and its advantages, reference is now made to the following description taken in conjunction with the accompanying drawings, in which like reference numerals represent like parts:
FIG. 1 is a schematic diagram illustrating a structure of a System Architecture Evolution (SAE) system;
FIG. 2 is a schematic diagram illustrating a basic principle for self-optimizing a SAE system;
FIG. 3 is a flowchart of a first method for detecting a cause of Radio Link Failure (RLF) or handover failure according to the present disclosure;
FIG. 4 is a flowchart of a second method for detecting a cause of Radio Link Failure (RLF) or handover failure according to the present disclosure;
FIG. 5 is a flowchart of a third method for detecting a cause of Radio Link Failure (RLF) or handover failure according to the present disclosure;
FIG. 6 is a flowchart of a fourth method for detecting a cause of Radio Link Failure (RLF) or handover failure according to the present disclosure;
FIG. 7 is a flowchart of a first embodiment of the first method for detecting a cause of Radio Link Failure (RLF) or handover failure according to the present disclosure;
FIG. 8 is a flowchart of a second embodiment of the first method for detecting a cause of Radio Link Failure (RLF) or handover failure according to the present disclosure;
FIG. 9 is a flowchart of a first embodiment of the second method for detecting a cause of Radio Link Failure (RLF) or handover failure according to the present disclosure;
FIG. 10 is a flowchart of a second embodiment of the second method for detecting a cause of Radio Link Failure (RLF) or handover failure according to the present disclosure;
FIG. 11 is a flowchart of an embodiment of the third method for detecting a cause of Radio Link Failure (RLF) or handover failure according to the present disclosure;
FIG. 12 is a flowchart of an embodiment of the forth method for detecting a cause of Radio Link Failure (RLF) or handover failure according to the present disclosure.

### Mode for the Invention

FIGURES 1 through 12, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged communication system.

In order to solve the problems in the existing technology, the present disclosure provides methods for detecting a cause of RLF or handover failure.

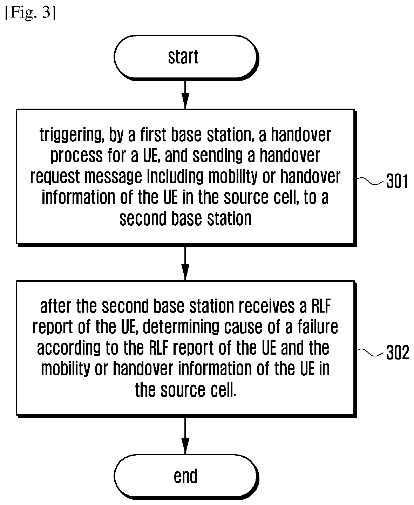

FIG. 3 is a flowchart of a first method for detecting a cause of Radio Link Failure (RLF) or handover failure according to the present disclosure. As shown in Fig. 3, the process includes:
Block 301: triggering, by a first base station, a handover process for a UE, and sending a handover request message including mobility or handover information of the UE in the source cell, to a second base station.

Here, the first base station is the source base station in the handover process, and the second base station is the target base station in the handover process.

The mobility or handover information of the UE includes one or more of following kinds of information:
measurement configuration information of UE;
measurement result report of UE when triggering handover;
whether there is CRE configuration information; when there is CRE configuration, it is configuration information of the CRE, such as value of deviation amount (bias) in a used measurement reporting event;
speed information of UE;
history information of UE;
Discontinuous reception (DRX) settings;
uplink power control information;
parameter settings of random access channel (RACH);
mobility load balancing information;
cause of handover.

Besides the information listed above, the mobility or handover information of the UE can also include other information.

Block 302: after the second base station receives a RLF report of the UE, determining, by the second base station, a cause of a failure according to the RLF report of the UE and the mobility or handover information of the UE in the source cell; i.e., when the second base station determines the cause of the failure according to the RLF report of the UE, the second base station considers the mobility or handover information of the UE in the source cell, for example, considering the CRE configuration of the UE.

At this point, the procedure of the first method for detecting a cause of the RLF or handover failure is finished.

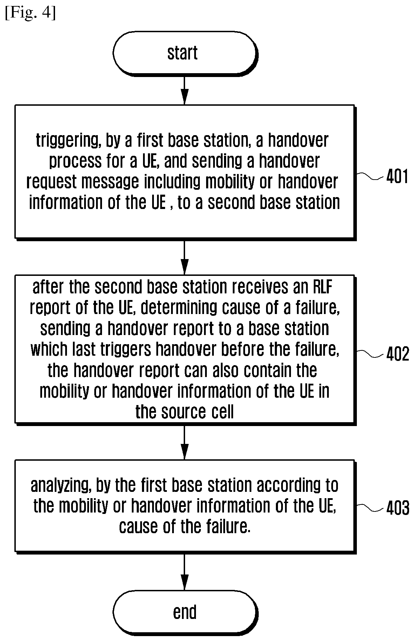

FIG. 4 is a flowchart of a second method for detecting a cause of Radio Link Failure or handover failure according to the present disclosure. As shown in Fig. 4, the flow includes:
Block 401 is the same as the block 301 and will not be repeated here.

In this method, the mobility or handover information of the UE sent from the first base station to the second base station can be the information described in the block 301, and can also be indirect information which can be used to obtain or derive the mobility or handover information of the UE in the source cell, and this depends on the concrete determination of the first base station. Specifically, the first base station can determine which information can be used to obtain the mobility or handover information of the UE according to the determination of the first base station, and sends this information to the second base station through a container. The second base station sends this information back to the first base station through a handover report in block 402, and the first base station can correctly parse this information and obtain the mobility or handover information of the UE. When different base stations are as the first base station, this information may be different; because this information will be sent back to the first base station through the handover report in the block 402, thus, as long as the first base station itself can correctly parse it.

Block 402: after the second base station receives an RLF report of the UE, determining, by the second base station, a cause of the failure of the UE according to the RLF report of the UE, and sending a handover report to the base station which last triggers handover before the failure. The handover report contains a handover report type, which can be a too early handover or handover to a wrong cell. The handover report can also contain mobility or handover information of the UE in the cell which triggers the last handover. The mobility or handover information of the UE in the cell which triggers the last handover can be the mobility or handover information of the UE received from the first base station, and can also be a mobility or handover information container of the UE which is received by the second base station from the handover request message sent by the first base station, and the second base station may not parse this information.

Block 403: analyzing, by the first base station according to the mobility or handover information of the UE, a cause of the failure. For example, when the UE has CRE configuration, the handover report type received from the second base station may need to be re-determined or confirmed according to the mobility or handover information of the UE. This is because the second base station determines the cause of the failure according to idle state information of the UE when the UE fails; while for a UE with CRE configuration, in a CRE area, the UE can be handed over to a pico cell when the UE is in a connection mode, but when the UE is in an idle mode, the UE will reselect to a macro cell. Thus, the handover in the connected mode and the cell reselection in the idle mode results in that the UE can access different cells in the CRE area. When the second base station cannot determine whether the UE has CRE configuration, a judgment made by the second base station based on a situation without CRE configuration may be incorrect; therefore, in this block, the first base station further analyzes the cause of the failure according to the handover report type and the mobility or handover information of the UE.

At this point, the procedure of the second method for detecting a cause of the RLF or handover failure is finished.

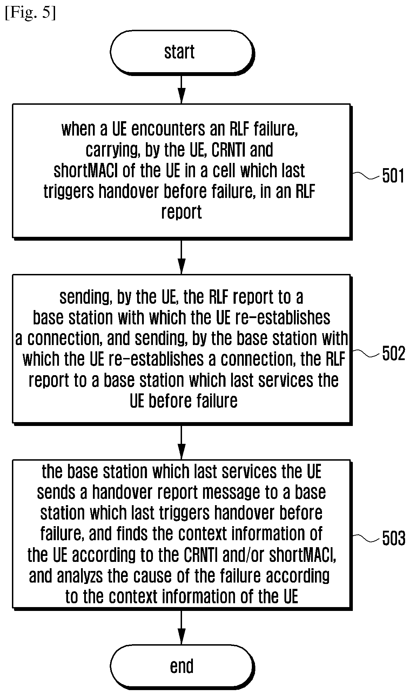

FIG. 5 is a flowchart of a third method for detecting a cause of Radio Link Failure or handover failure according to the present disclosure. As shown in Fig. 5, the flow includes:
Block 501: when a UE encounters an RLF failure, carrying, by the UE, CRNTI of the UE in the cell which last triggers a handover before failure, in an RLF report which can also carry shortMACI of the UE in the cell which last triggers a handover before failure.
Block 502: sending, by the UE, the RLF report to a base station with which the UE re-establishes a connection, and sending, by the base station with which the UE re-establishes a connection, the RLF report to the base station which last services the UE before failure.
Block 503: determining, by the base station which last services the UE, a cause of the failure of the UE according to the RLF report of the UE. If it is a too early handover or a handover to a wrong cell, the base station which last services the UE sends a handover report message to a base station which last triggers a handover before failure. The handover report contains handover report type which can be a too early handover or a handover to a wrong cell. The handover report can also contain the CRNTI and/or the shortMACI of the UE in the cell which last triggers a handover. A base station where the cell which last triggers a handover is located, finds the context information of the UE according to the CRNTI and/or shortMACI, and detects or confirms the cause of the failure according to the context information of the UE. For example, as described in the block 403, when the UE has CRE configuration, the handover report type received from the base station which last services the UE may need to be re-determined or confirmed according to the context information of the UE referring to mobility or handover.

It should be noted that an existing UE RLF report contains a cell identity of the cell which last services the UE, and a cell identity of the cell which last triggers a handover process. A base station which receives the UE RLF report, can find the base station where the cell which last services the UE is located, according to the cell identity of the cell which last services the UE in the UE RLF report. The base station where the cell which last services the UE is located can find a cell which services the UE when the failure occurs according to the cell identity of the cell which last services the UE. The base station which receives the UE RLF report or the base station where the cell which last services the UE is located, can determine the base station where a cell which last triggers a handover process is located according to the cell identity of the cell which last triggers handover process in the RLF report. The base station where the cell which last triggers handover process is located can find the cell which last triggers handover process according to the cell identity of the cell which last triggers handover process. After the cell which last services the UE or the cell which last triggers the handover process is found, context information of the UE which encounters failure in the corresponding cell can be found according to the corresponding CRNTI and/or shortMACI of the UE in the cell.

In the third method, after the UE has been successfully handed over from a source cell, the context information of the UE is reserved in the source cell for a period of time before being released, and the specific reserved time can depend on a configured fixed value.

At this point, the procedure of the third method for detecting a cause of the RLF or handover failure is finished.

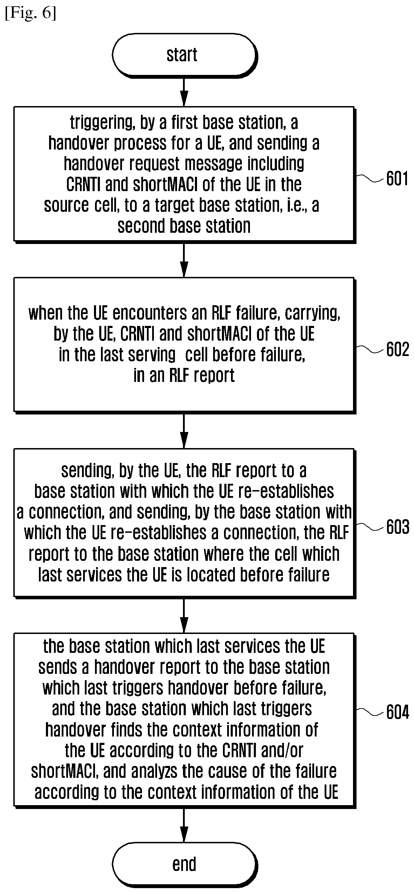

FIG. 6 is a flowchart of a fourth method for detecting a cause of Radio Link Failure or handover failure according to the present disclosure. As shown in Fig. 6, the flow includes:
Block 601: triggering, by a first base station, a handover process for a UE, and sending a handover request message including CRNTI of the UE in the source cell, to a target base station, i.e., a second base station. The message can also include shortMACI of the UE in the source cell.
Block 602: when the UE encounters an RLF failure in the second base station, carrying, by the UE, CRNTI of the UE in the last serving cell before failure, in an RLF report which may also carry shortMACI of the UE in the last serving cell before failure.
Block 603: sending, by the UE, the RLF report to the base station with which the UE re-establishes a connection, and sending, by the base station with which the UE re-establishes a connection, the RLF report to a base station where a cell which last services the UE is located before failure, i.e., the second base station. The second base station finds a context of the UE according to the CRNTI and/or shortMACI in the last serving cell reported by the UE.
Block 604: determining, by the base station which last services the UE, a cause of the failure of the UE according to the RLF report of the UE. If it is a too early handover or a handover to a wrong cell, the base station which last services the UE sends a handover report to the base station which triggers the last handover before failure. The handover report contains a handover report type which can be a too early handover or a handover to a wrong cell. The handover report can also contain the CRNTI and/or the shortMACI of the UE in the cell which triggers the last handover. The second base station finds the CRNTI and/or shortMACI of the UE in the cell which triggers the last handover according to the context information of the UE in the last serving cell. The last serving cell saved the CRNTI and/or shortMACI of the UE in the cell which triggers the last handover in block 601. The base station where the cell which last triggers handover is located finds the context information of the UE according to the received CRNTI and/or shortMACI, and analyzes or confirms the cause of the failure according to the context information of the UE. For example, as described in the block 403, when the UE has CRE configuration, the handover report type received from the base station which last services the UE may need to be re-determined or confirmed according to the context information of the UE referring to mobility or handover.

In the fourth method, after the UE has been successfully handed over from the source cell, the context information of the UE is reserved in the source cell for a period of time before being released, and the specific reserved time can depend on a configured fixed value.

At this point, the procedure of the fourth method for detecting a cause of the RLF or handover failure is finished.

The technical solution of the present disclosure will be hereinafter described in detail with reference to several embodiments.

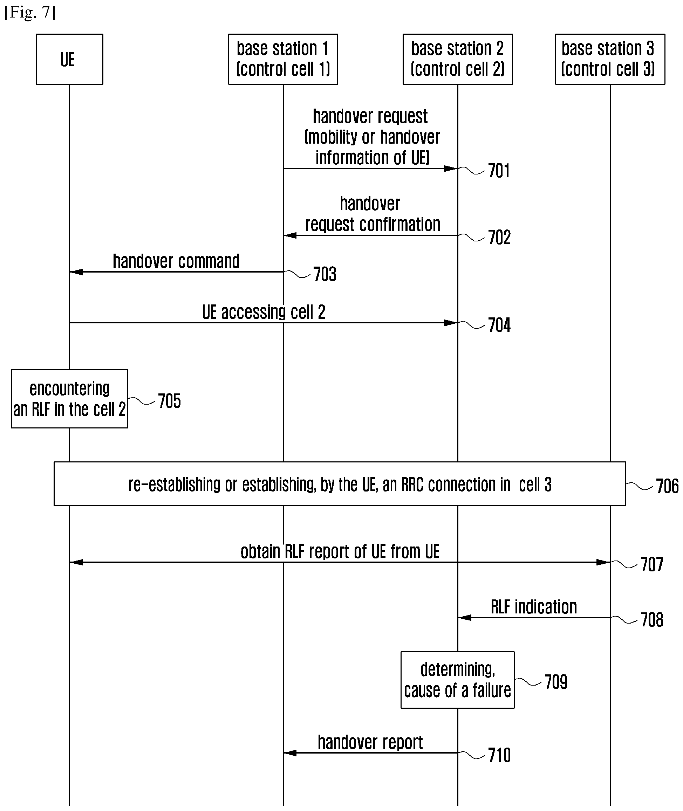

Based on the above methods, FIG. 7 shows a flowchart of a first embodiment of the first method for detecting a cause of Radio Link Failure (RLF) or handover failure according to the present disclosure. As shown in Fig. 7, the flow includes:
Block 701: triggering, by a base station 1, a handover process for a UE, and sending a handover request message including mobility or handover information of the UE in the source cell, to a target base station, i.e., base station 2. The mobility or handover information of the UE is the same as that of the block 301, and will not be repeated here. The base station 2 saves the mobility or handover information of the UE in a cell 1 of the base station 1 in the UE context.
Block 702: sending, by the base station 2, a handover request confirmation message to the base station 1.
Block 703: sending, by the base station 1, a handover command message to the UE.
Block 704: the UE successfully accessing a cell 2. Here, it may be that the UE sends a random access success.
Block 705: the UE encountering an RLF in the cell 2.
Block 706: re-establishing or establishing, by the UE, an RRC connection in a cell 3. In the process of establishment of the RRC connection, the UE indicates to the network RLF report information.
Block 707: sending, by the UE, the RLF report to a base station 3. Specifically, the base station 3 obtains information that the UE has an RLF report, and the base station 3 sends a UE information request to the UE to request for the RLF report information. The UE sends a UE information response containing the RLF report information of the UE to the base station. The RLF report information of the UE contains CRNTI and/or shortMACI information of the UE in the last serving cell before failure. The information can also contain a failure occurred time or a time difference between connection failure and the RLF reporting from the UE.
Block 708: sending, by the base station 3, an RLF indication message to the base station (the base station 2) which last services the UE before failure. The message contains the RLF report information received from the UE.
Block 709: determining, by the base station which last services the UE, a cause of a failure. The base station 2 determines the cause of the failure according to the RLF report of the UE and the mobility or handover information of the UE in the source base station, for example, considering speed of the UE and whether the UE has CRE configuration and so on. The base station which last services the UE can find the context of the UE according to the CRNTI and/or shortMACI of the UE in the base station which last services the UE. The base station which last services the UE can also find the context of the UE according to the CRNTI of the UE and failure occurred time, or the time difference between the connection failure and the RLF reporting from the UE. The base station which last services the UE can also learn configuration information of the UE when the failure occurs according to the failure occurred time or the time difference between the connection failure and the RLF reporting from the UE and the context information of the UE, thereby correctly determining the cause why the failure occurs.
Block 710: sending, by the base station 2, a handover report to the base station which last triggers a handover before failure. The handover report contains a handover report type which can be a too early handover or a handover to a wrong cell.

At this point, the procedure of the first embodiment of the first method for detecting a cause of the RLF or handover failure is finished.

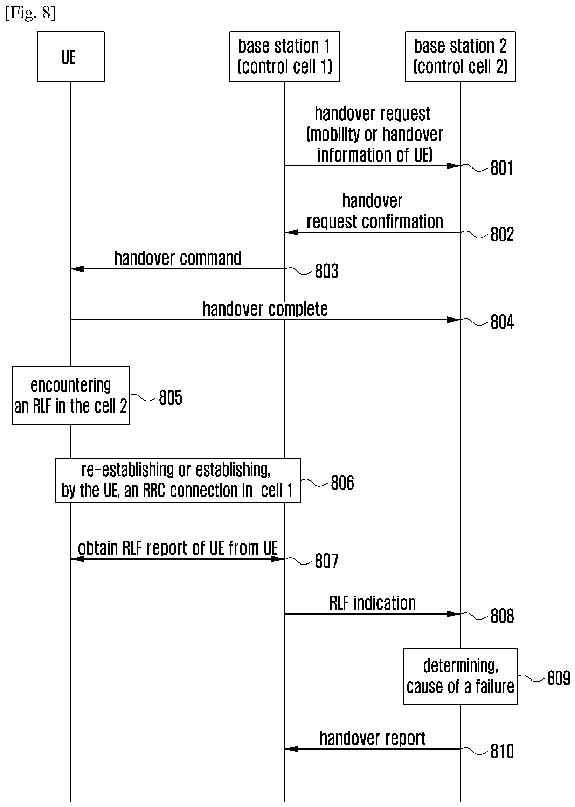

Based on the above methods, FIG. 8 shows a flowchart of a second embodiment of the first method for detecting a cause of Radio Link Failure or handover failure according to the present disclosure. As shown in Fig. 8, the flow includes:
Block 801 to block 805 are the same as block 701 to block 705, and will not be repeated here.
Block 806: re-establishing or establishing, by the UE, an RRC connection in a cell 1 (i.e., a cell which is controlled by a base station which last triggers a handover before failure). In the process of establishment of the RRC connection, the UE indicates to the network RLF report information.
Block 807: sending, by the UE, the RLF report to a base station 1. Specifically, the base station 1 obtains information that the UE has an RLF report, and the base station 1 sends a UE information request to the UE to request for the RLF report information. The UE sends a UE information response containing the RLF report information of the UE to the base station. The RLF report information of the UE contains CRNTI and/or shortMACI information of the UE in the last serving cell before failure. The information can also contain a failure occurred time or a time difference between connection failure and the RLF reporting from the UE.
Block 808: sending, by the base station 1, an RLF indication message to a base station which last services the UE before failure. The message contains the RLF report information received from the UE.
Block 809: determining, by the base station which last services the UE, a cause of a failure. The base station determines the cause of the failure according to content of the RLF report of the UE and the mobility or handover information of the UE in the source cell, for example, considering speed of the UE and whether the UE has CRE configuration and so on. The base station which last services the UE can find the context of the UE according to the CRNTI and/or shortMACI of the UE in the last serving cell. The base station which last services the UE can also find the context of the UE according to the CRNTI of the UE and the failure occurred time, or the time difference between connection failure and the RLF reporting from the UE. The base station which last services the UE can also learn configuration information of the UE when the failure occurs according to the failure occurred time or the time difference between connection failure and the RLF reporting from the UE and the context information of the UE, thereby correctly determining the cause why the failure occurs.
Block 810: sending, by the base station 2, a handover report to the base station which last triggers a handover before failure. The handover report contains a handover report type which can be a too early handover or a handover to a wrong cell.

At this point, the procedure of the second embodiment of the first method for detecting a cause of the RLF or handover failure is finished.

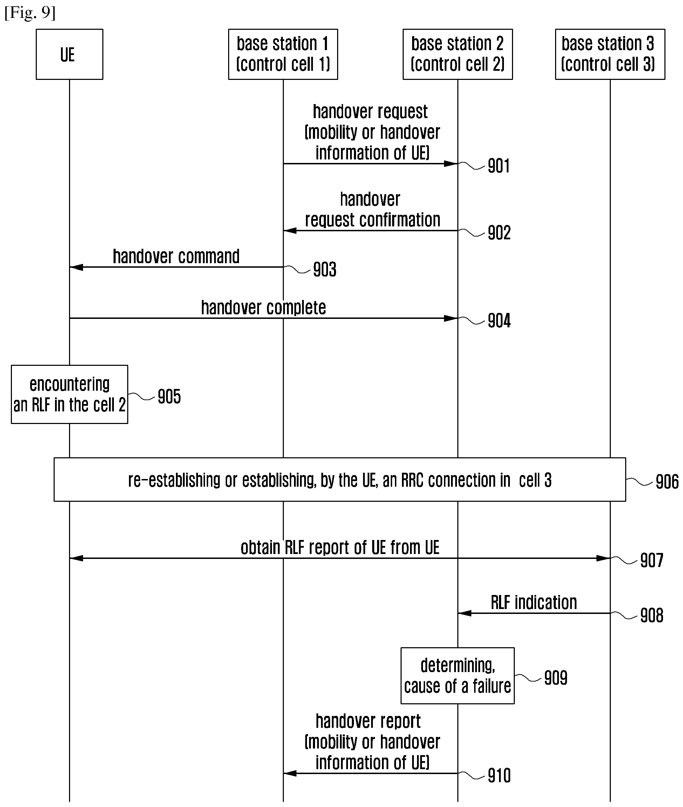

Based on the above methods, FIG. 9 shows a flowchart of a first embodiment of the second method for detecting a cause of Radio Link Failure or handover failure according to the present disclosure. As shown in Fig. 9, the flow includes:
Block 901: triggering, by a base station 1, a handover process for a UE, and sending a handover request message including mobility or handover information of the UE in the source cell, to a target base station, i.e., base station 2. The mobility or handover information of the UE is the same as that of the block 401, and will not be repeated here. The base station 2 saves the mobility or handover information of the UE in cell 1 of the base station 1 in the UE context.
Block 902 to block 908 are the same as block 702 to block 708, and will not be repeated here.
Block 909: determining, by the base station which last services the UE, a cause of a failure. The base station determines the cause of the failure according to the RLF report of the UE. The base station which last services the UE can find the context of the UE according to the CRNTI and/or shortMACI of the UE in the last serving cell. The base station which last services the UE can also find the context of the UE according to the CRNTI of the UE in the last serving cell and failure occurred time, or the time difference between the connection failure and the RLF reporting from the UE.
Block 910: sending, by the base station 2, a handover report to the base station which triggers the last handover before failure. The handover report contains a handover report type which can be a too early handover or handover to a wrong cell. The base station 2 also carries the mobility or handover information of the UE in the source cell (the cell which triggers the last handover before failure) in the handover report. The mobility or handover information of the UE in the source cell is the same as that of the block 401, and will not be repeated here. After the base station 2 finds the context of the UE in the block 909, the base station 2 can learn the saved mobility or handover information of the UE in the source cell. The base station 2 may not need to parse the specific content or meanings of the mobility or handover information.

The base station which last triggers a handover analyzes a handover report type received from the base station 2 according to the mobility or handover information of the UE in the source base station. For example, considering speed of the UE and whether the UE has CRE configuration and so on. The base station which last triggers a handover can also learn configuration information of the UE when the failure occurs according to the failure occurred time or the time difference between connection failure and the RLF reporting from the UE and the context information of the UE, thereby correctly determining the cause why the failure occurs.

At this point, the procedure of the first embodiment of the second method for detecting a cause of the RLF or handover failure is finished.

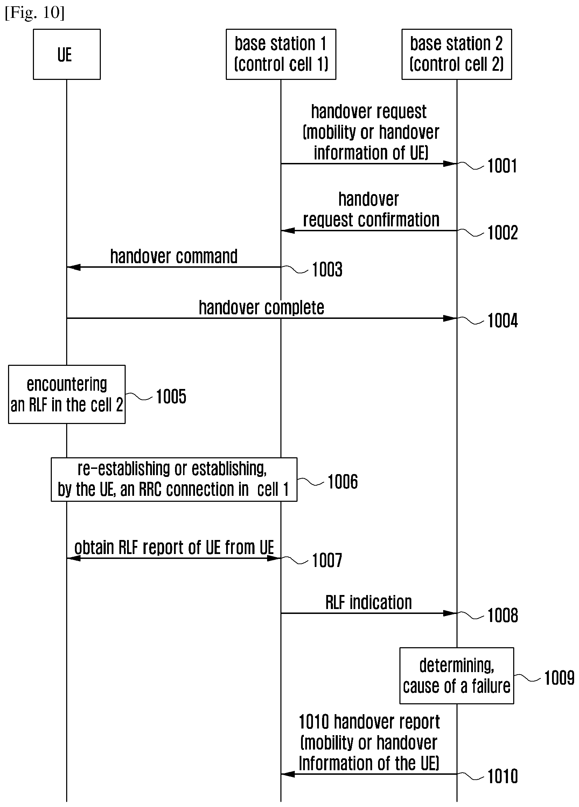

Based on the above methods, FIG. 10 shows a flowchart of a second embodiment of the second method for detecting a cause of Radio Link Failure or handover failure. As shown in Fig. 10, the flow includes:
Block 1001 is the same as the block 901, and will not be repeated here.
Block 1002 to block 1008 are the same as block 802 to block 808, and will not be repeated here.
Block 1009 to block 1010 are the same as block 909 to block 910, and will not be repeated here.

At this point, the procedure of the second embodiment of the second method for detecting a cause of the RLF or handover failure is finished.

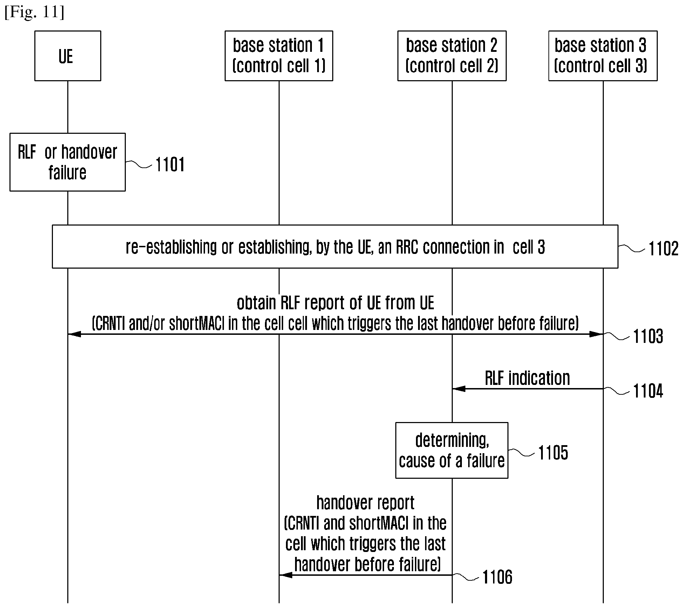

Based on the above methods, FIG. 11 shows a flowchart of one embodiment of the third method for detecting a cause of Radio Link Failure or handover failure. As shown in Fig. 11, the flow includes:
Block 1101: a UE encountering an RLF or handover failure.
Block 1102: re-establishing or establishing, by the UE, an RRC connection in a cell 3. In the process of establishment of the RRC connection, the UE indicates to the network RLF report information.
Block 1103: sending, by the UE, the RLF report to the base station 3. Specifically, the base station 3 obtains information that the UE has an RLF report, and the base station 3 sends a UE information request to the UE to request for the RLF report information. The UE sends a UE information response containing the RLF report information of the UE to the base station. The RLF report information of the UE contains CRNTI and/or shortMACI information of the UE in a cell which last triggers a handover before failure. The information can also contain a failure occurred time or a time difference between connection failure and the RLF reporting from the UE.
Block 1104: sending, by the base station 3, an RLF indication message to the base station (i.e., base station 2) which last services the UE before failure. The message contains the RLF report information received from the UE.
Block 1105: determining, by the base station which last services the UE, a cause of a failure according to content of the RLF report of the UE.
Block 1106: sending, by the base station 2, a handover report to the base station which last triggers handover before failure. The handover report contains a handover report type which can be a too early handover or a handover to a wrong cell. The handover report can also contain the CRNTI and/or the shortMACI of the UE in the cell which triggers the last handover before failure. The information can also contain a failure occurred time or a time difference between connection failure and the RLF reporting from the UE.

The handover report can also contain mobility or handover information of the UE in the cell which last triggers handover.

The base station where the cell which last triggers a handover is located can find the context of the UE according to the CRNTI and/or shortMACI of the UE in the cell which last triggers a handover. The base station where the cell which last triggers a handover is located can also find the context of the UE according to the CRNTI and a failure occurred time, or the time difference between connection failure and the RLF reporting from the UE.

The base station which last triggers a handover determines or confirms the handover report type received from the base station 2 according to the context of the UE, for example, considering speed of the UE and whether the UE has CRE configuration and so on. The base station which last triggers a handover can also learn configuration information of the UE when the failure occurs according to the failure occurred time or the time difference between the connection failure and the RLF reporting from the UE and the context information of the UE, thereby correctly determining the cause why the failure occurs.

At this point, the procedure of one embodiment of the third method for detecting a cause of the RLF or handover failure is finished.

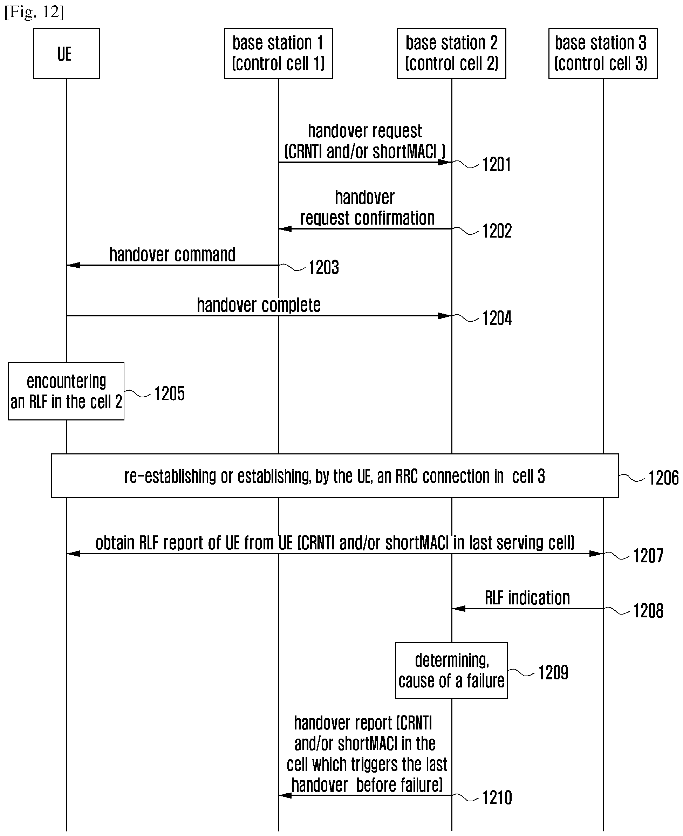

Based on the above methods, FIG. 12 shows a flowchart of one embodiment of the fourth method for detecting cause of Radio Link Failure or handover failure according to the present disclosure. As shown in Fig. 12, the flow includes:
Block 1201: triggering, by a base station 1, a handover process for a UE, and sending a handover request message including CRNTI of the UE in the source cell, to a target base station. The base station 1 can also carry shortMACI of the UE in the source cell in the handover request message. The base station 2 saves CRNTI and/or shortMACI of the UE in cell 1 of the base station 1 in the UE context.
Block 1202 to block 1205 are the same as block 702 to block 705, and will not be repeated here.
Block 1206: re-establishing or establishing, by the UE, an RRC connection in a cell 3. In the process of establishment of the RRC connection, the UE indicates to the network RLF report information.
Block 1207: sending, by the UE, the RLF report to a base station 3. Specifically, the base station 3 obtains information that the UE has an RLF report, and the base station 3 sends a UE information request to the UE to request for the RLF report information. The UE sends a UE information response containing the RLF report information of the UE to the base station 3. The RLF report information of the UE contains CRNTI and/ or shortMACI information of the UE in the last serving cell before failure. The information can also contain a failure occurred time or a time difference between connection failure and the RLF reporting from the UE.
Block 1208: sending, by the base station 3, an RLF indication message to a base station which last services the UE before failure. The message contains the RLF report information received from the UE.
Block 1209: determining, by the base station which last services the UE, a cause of a failure. The base station determines the cause of the failure according to the RLF report of the UE. The base station which last services the UE can find the context of the UE according to the CRNTI and/or shortMACI of the UE in the last serving cell. The cell which last services the UE can also find the context of the UE according to the CRNTI and failure occurred time, or the time difference between connection failure and the RLF reporting from the UE.
Block 1210: sending, by the base station 2, a handover report to the base station which triggers the last handover before failure. The handover report contains a handover report type which can be a too early handover or a handover to a wrong cell. The base station 2 carries the CRNTI of the UE in the source cell (the cell which last triggers the last handover before failure) in the handover report, and can also carry shortMACI of the UE in the source cell (the cell which triggers the last handover before failure) in the handover report. After the base station 2 finds the context of the UE in the block 1209, the base station 2 can learn the saved CRNTI and/or shortMACI of the UE in the source cell.

The base station which triggers the last handover before failure can find the context of the UE according to the CRNTI and/or shortMACI of the UE in the source cell. The base station where the cell which triggers the last handover before failure is located can also find the context of the UE according to the CRNTI of the UE in the source cell and failure occurred time, or the time difference between connection failure and the RLF reporting from the UE.

The base station which triggers the last handover before failure analyzes or confirms the handover report type received from the base station 2 according to the context of the UE, for example, considering a speed of the UE and whether the UE has CRE configuration and so on. The base station which triggers the last handover can also learn configuration information of the UE when the failure occurs according to the failure occurred time or the time difference between connection failure and the RLF reporting from the UE and the context information of the UE, thereby correctly determining the cause why the failure occurs.

At this point, the procedure of one example of the fourth method for detecting a cause of the RLF or handover failure is finished.

It can be seen from the above description, in the first method for detecting a cause of radio link failure (RLF) or handover failure provided in the present disclosure, the mobility or handover information of the UE in the source cell is sent to a target base station, when the target base station receives the RLF report of the UE, the target base station can determine a cause of a failure according to the RLF report of the UE and the mobility or handover information of the UE in the source cell, so that the base station can correctly determine the cause why the UE encounters the RLF or handover failure, to avoid the base station from saving context information of the UE which has moved away, and to improve efficiency of MRO and improve system performance. Meanwhile, this method is compatible with existing technology, and can avoid the problem that two nodes detect the cause of failure.

The second method for detecting a cause of radio link failure (RLF) or handover failure provided in the present disclosure can avoid a base station from saving context information of a UE which has moved away, and improve efficiency of MRO and improve system performance.

The third method and the fourth method provided in the present disclosure can make the network find a correct UE context so as to learn handover or mobility configuration information of the UE according to the UE context, thereby correctly determining the cause why the UE encounters RLF or handover failure so as to improve efficiency of MRO and improve system performance.

In embodiments of the present invention, mobility information included in a handover report or handover report message is used for analyzing conditions that led to a wrong handover. In certain exemplary embodiments, the analyzing is performed by at least one of a source base station and a target base station.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method, performed by a system, for detecting a cause of a handover failure at a target base station wherein the system comprises: a source base station; the target base station; a user equipment, UE; and a base station connected with the UE after the handover failure at the target base station, the method comprising:
transmitting (901), from the source base station to the target base station, a handover request message including mobility information, which is associated with a handover and provided to enable analysis of conditions that led to the handover failure at the target base station, of the UE:
transmitting (907, 1103) a radio link failure, RLF, report from the UE to the base station connected with the UE, wherein the RLF report includes time information indicating a time elapsed from the handover failure till signalling of the RLF report;
transmitting (908, 1104) a RLF indication message from the base station connected with the UE to the target base station;
receiving (910, 1106), at the source base station from the target base station, a handover report message including the mobility information and a cell-radio network temporary identifier, C-RNTI, of the UE in a source cell used to identify the UE; and
identifying, by the source base station, a UE context based on the C-RNTI of the UE in the source cell and information on the handover failure at the target base station based on the mobility information.

2. The method of claim 1, wherein the RLF indication message includes the RLF report which is transmitted from the UE (1103).

3. The method of claim 1, wherein the RLF report further includes a C-RNTI of the UE in a last serving cell.

4. The method of claim 1, wherein the handover request message further includes the C-RNTI of the UE in the source cell.

5. The method of claim 1, wherein the handover report message further includes a type of handover failure which is one of too early handover or handover to wrong cell.

6. A system for detecting a cause of a handover failure at a target base station, the system comprising: a source base station; the target base station; a user equipment, UE; and a base station connected with the UE after the handover failure at the target base station, wherein the source base station comprises:
a data communication unit configured to transmit and receive data; and
a control unit configured to control the data communication unit to
transmit, to the target base station, a handover request message including mobility information, which is associated with a handover and provided to enable analysis of conditions that led to the handover failure at the target base station, of the UE,
receive, from the target base station, a handover report message including the mobility information and a cell-radio network temporary identifier, C-RNTI, of the UE in a source cell used to identify the UE, and
identify a UE context based on the C-RNTI of the UE in the source cell and information on the handover failure at the target base station based on the mobility information,
wherein the base station connected with the UE is configured to transmit a radio link failure, RLF, indication message to the target base station (1104),
wherein the UE is configured to transmit a RLF report to the base station connected with the UE (1103), and
wherein the RLF report includes time information indicating a time elapsed from the handover failure till signalling of the RLF report.

7. The system of claim 6, wherein the RLF indication message includes the RLF report which is transmitted from the UE (1103).

8. The system of claim 6, wherein the RLF report further includes a C-RNTI of the a last serving cell.

9. The system of claim 6, wherein the handover request message further includes the C-RNTI of the UE in the source cell.

10. The system of claim 6, wherein the handover report message further includes a type of handover failure which is one of too early handover or handover to wrong cell.

11. A system for detecting a cause of handover failure at a target base station, the system comprising: a source base station; the target base station; a user equipment, UE; and a base station connected with the UE after the handover failure at the target base station, wherein the target base station comprises:
a data communication unit configured to send and receive data; and
a control unit configured to control the data communication unit to
receive, from the source base station, a handover request message including mobility information, which is associated with a handover and provided to enable analysis of conditions that led to the handover failure at the target base station, of the UE,
receive a radio link failure, RLF, indication message from the base station connected with the UE, and
transmit, to the source base station, a handover report including the mobility information and a cell-radio network temporary identifier, C-RNTI, of the UE in a source cell used to identify the UE,
wherein the source base station is configured to identify a UE context based on the C-RNTI of the UE in the source cell and information on the handover failure at the target base station based on the mobility information,
wherein the UE is configured to transmit a RLF report to the base station connected with the UE, and
wherein the RLF report includes time information indicating a time elapsed from the handover failure till signalling of the RLF report.

12. The system of claim 11, wherein the RLF indication message includes the RLF report which is transmitted from the UE (1103).

13. The system of claim 11, wherein the RLF report further includes a C-RNTI of the UE a last serving cell.

14. The system of claim 11, the handover request message further includes the C-RNTI of the UE in the source cell.

15. The system of claim 11, wherein the handover report message further includes a type of handover failure which is one of too early handover or handover to wrong cell.

## Patentansprüche

1. Von einem System ausgeführtes Verfahren zum Erkennen einer Ursache eines Weiterschaltungsfehlers an einer Zielbasisstation, wobei das System aufweist: eine Quell- Basisstation;
die Zielbasisstation; ein Benutzergerät, UE; und eine Basisstation, die mit dem UE nach dem Weiterschaltungsfehler an der Zielbasisstation verbunden ist, wobei das Verfahren aufweist:
ein Übertragen (901) einer Weiterschaltungsanforderungsnachricht von der Quell-Basisstation an die Zielbasisstation, die Mobilitätsinformationen enthält, die einer Weiterschaltung zugehörig sind und bereitgestellt werden, um eine Analyse von Bedingungen zu ermöglichen, die zu dem Weiterschaltungsfehler an der Zielbasisstation des UE geführt haben;
ein Übertragen (907, 1103) eines Funkverbindungsfehler-, RLF, Berichts von dem UE zu der Basisstation, die mit dem UE verbunden ist, wobei der RLF-Bericht Zeitinformationen enthält, die eine Zeit angeben, die ab dem Weiterschaltungsfehler bis zur Signalisierung des RLF-Berichts verstrichen ist;
ein Übertragen (908, 1104) einer RLF-Anzeigenachricht von der Basisstation, die mit dem UE verbunden ist, an die Zielbasisstation;
ein Empfangen (910, 1106) einer Weiterschaltungsberichtsnachricht von der Zielbasisstation an der Quell-Basisstation, die die Mobilitätsinformationen und eine temporäre Kennung eines Zellenfunknetzwerks, C-RNTI, des UE in einer Ursprungszelle enthält, die zum Identifizieren des UE verwendet wird;
und ein Identifizieren eines UE-Kontexts auf Grundlage der C-RNTI des UE in der Ursprungszelle und von Informationen über den Weiterschaltungsfehler an der Zielbasisstation auf Grundlage der Mobilitätsinformationen durch die Quell-Basisstation.

2. Verfahren nach Anspruch 1, wobei die RLF-Anzeigenachricht den RLF-Bericht enthält, der von dem UE (1103) übertragen wird.

3. Verfahren nach Anspruch 1, wobei der RLF-Bericht ferner eine C-RNTI des UE in einer letzten bedienenden Zelle enthält.

4. Verfahren nach Anspruch 1, wobei die Weiterschaltungsanforderungsnachricht ferner die C-RNTI des UE in der Ursprungszelle enthält.

5. Verfahren nach Anspruch 1, wobei die Weiterschaltungsberichtsnachricht ferner einen Typ von Weiterschaltungsfehler enthält, der entweder eine zu frühe Weiterschaltung oder eine Weiterschaltung an die falsche Zelle ist.

6. System zum Erkennen einer Ursache eines Weiterschaltungsfehlers an einer Zielbasisstation, wobei das System aufweist:
eine Quell-Basisstation;
die Zielbasisstation; ein Benutzergerät, UE; und eine Basisstation, die mit dem UE nach dem Weiterschaltungsfehler an der Zielbasisstation verbunden ist, wobei die Quell-Basisstation aufweist:
eine Datenkommunikationseinheit, die konfiguriert ist, um Daten zu übertragen und zu empfangen; und eine Steuereinheit, die konfiguriert ist, um die Datenkommunikationseinheit zu steuern, eine Weiterschaltungsanforderungsnachricht an die Zielbasisstation zu übertragen, die Mobilitätsinformationen enthält, die einer Weiterschaltung zugehörig sind und bereitgestellt werden, um eine Analyse von Bedingungen zu ermöglichen, die zu dem Weiterschaltungsfehler an der Zielbasisstation des UE geführt haben, um von der Zielbasisstation eine Weiterschaltungsberichtsnachricht zu empfangen, die die Mobilitätsinformationen und eine temporäre Kennung eines Zellenfunknetzwerks, C-RNTI, des UE in einer Ursprungszelle enthält, die zum Identifizieren des UE verwendet wird, und um einen UE-Kontext auf Grundlage der C-RNTI des UW in der Ursprungszelle und von Informationen über den Weiterschaltungsfehler an der Zielbasisstation auf Grundlage der Mobilitätsinformationen zu identifizieren, wobei die mit dem UE verbundene Basisstation konfiguriert ist, um eine Funkverbindungsfehler-, RLF, Anzeigenachricht an die Zielbasisstation zu übertragen (1104), wobei das UE konfiguriert ist, einen RLF-Bericht an die Basisstation zu übertragen, die mit dem UE verbunden ist (1103), und wobei der RLF-Bericht Zeitinformationen enthält, die eine Zeit angeben, die ab dem Weiterschaltungsfehler bis zur Signalisierung des RLF-Berichts verstrichen ist.

7. System nach Anspruch 6, wobei die RLF-Anzeigenachricht den RLF-Bericht enthält, der von dem UE übertragen wird (1103).

8. System nach Anspruch 6, wobei der RLF-Bericht ferner eine C-RNTI der letzten bedienenden Zelle enthält.

9. System nach Anspruch 6, wobei die Weiterschaltungsanforderungsnachricht ferner die C-RNTI des UE in der Ursprungszelle enthält.

10. System nach Anspruch 6, wobei die Weiterschaltungsberichtsnachricht ferner einen Typ von Weiterschaltungsfehler enthält, der entweder eine zu frühe Weiterschaltung oder eine Weiterschaltung an die falsche Zelle ist.

11. System zum Erkennen einer Ursache eines Weiterschaltungsfehlers an einer Zielbasisstation, wobei das System aufweist:
eine Quell-Basisstation;
die Zielbasisstation; ein Benutzergerät, UE; und eine Basisstation, die mit dem UE nach dem Weiterschaltungsfehler an der Zielbasisstation verbunden ist, wobei die Zielbasisstation aufweist:
eine Datenkommunikationseinheit, die konfiguriert ist, um Daten zu übertragen und zu empfangen;
und eine Steuereinheit, die konfiguriert ist, um die Datenkommunikationseinheit zu steuern, um eine Weiterschaltungsanforderungsnachricht von der Quell-Basisstation zu empfangen, die Mobilitätsinformationen enthält, die einer Weiterschaltung zugehörig sind und bereitgestellt werden, um eine Analyse von Bedingungen zu ermöglichen, die zu dem Weiterschaltungsfehler an der Zielbasisstation des UE geführt haben, um von der Basisstation, die mit dem UE verbunden ist, eine RLF-Anzeigenachricht zu empfangen und an die Quell-Basisstation einen Weiterschaltungsbericht zu übertragen, der die Mobilitätsinformationen und eine temporäre Kennung eines Zellenfunknetzwerks, C-RNTI, des UE in einer Ursprungszelle enthält, die zum Identifizieren des UE verwendet wird, wobei die Quell-Basisstation konfiguriert ist, um einen UE-Kontext auf Grundlage der C-RNTI des UE in der Ursprungszelle und von Informationen über den Weiterschaltungsfehler an der Zielbasisstation auf Grundlage der Mobilitätsinformationen zu identifizieren, wobei das UE konfiguriert ist, einen RLF-Bericht an die Basisstation zu übertragen, die mit dem UE verbunden ist, und wobei der RLF-Bericht Zeitinformationen enthält, die eine Zeit angeben, die ab dem Weiterschaltungsfehler bis zur Signalisierung des RLF-Berichts verstrichen ist.

12. System nach Anspruch 11, wobei die RLF-Anzeigenachricht den RLF-Bericht enthält, der von dem UE übertragen wird (1103).

13. System nach Anspruch 11, wobei der RLF-Bericht ferner eine C-RNTI des UE der letzten bedienenden Zelle enthält.

14. System nach Anspruch 11, wobei die Weiterschaltungsanforderungsnachricht ferner die C-RNTI des UE in der Ursprungszelle enthält.

15. System nach Anspruch 11, wobei die Weiterschaltungsberichtsnachricht ferner einen Typ von Weiterschaltungsfehler enthält, der entweder eine zu frühe Weiterschaltung oder eine Weiterschaltung an die falsche Zelle ist.

## Revendications

1. Procédé, exécuté par un système, permettant de détecter une cause d'échec de transfert intercellulaire au niveau d'une station de base cible dans lequel le système comprend : une station de base source ; la station de base cible ; un équipement utilisateur (UE) ; et une station de base connectée à l'UE après l'échec de transfert intercellulaire au niveau de la station de base cible, le procédé comprenant :
la transmission (901), de la station de base source à la station de base cible, d'un message de demande de transfert intercellulaire comprenant des informations de mobilité, qui est associé à un transfert intercellulaire et fourni pour permettre une analyse des conditions qui conduisent à l'échec de transfert intercellulaire au niveau de la station de base cible, de l'UE ;
la transmission (907, 1103) d'un rapport de défaillance de liaison radio (RLF) de l'UE à la station de base connectée à l'UE, dans lequel le rapport RLF comprend des informations temporelles indiquant un temps écoulé depuis l'échec de transfert intercellulaire jusqu'au signalement du rapport RLF ;
la transmission (908, 1104) d'un message d'indication de RLF de la station de base connectée à l'UE à la station de base cible ;
la réception (910, 1106), au niveau de la station de base source en provenance de la station de base cible, d'un message de rapport de transfert intercellulaire comprenant les informations de mobilité et un identifiant temporaire de réseau radio-cellulaire (C-RNTI) de l'UE dans une cellule source utilisée pour identifier l'UE ; et
l'identification, par la station de base source, d'un contexte d'UE sur la base du C-RNTI de l'UE dans la cellule source et d'informations sur l'échec de transfert intercellulaire au niveau de la station de base cible sur la base des informations de mobilité.

2. Procédé selon la revendication 1, ledit message d'indication de RLF comprenant le rapport RLF qui est transmis depuis l'UE (1103).

3. Procédé selon la revendication 1, ledit rapport RLF comprenant en outre un C-RNTI de l'UE dans une dernière cellule de desserte.

4. Procédé selon la revendication 1, ledit message de demande de transfert intercellulaire comprenant en outre le C-RNTI de l'UE dans la cellule source.

5. Procédé selon la revendication 1, ledit message de rapport de transfert intercellulaire comprenant en outre un type d'échec de transfert intercellulaire qui est l'un d'un transfert intercellulaire trop précoce ou d'un transfert intercellulaire à la mauvaise cellule.

6. Système pour détecter une cause d'échec de transfert intercellulaire au niveau d'une station de base cible, le système comprenant : une station de base source ; la station de base cible ; un équipement utilisateur (UE) ; et une station de base connectée à l'UE après l'échec de transfert intercellulaire au niveau de la station de base cible, ladite station de base source comprenant :
une unité de communication de données configurée pour transmettre et recevoir des données ; et
une unité de commande configurée pour commander l'unité de communication de données pour transmettre, à la station de base cible, un message de demande de transfert intercellulaire comprenant des informations de mobilité, qui est associé à un transfert intercellulaire et fourni pour permettre une analyse des conditions qui conduisent à l'échec de transfert intercellulaire au niveau de la station de base cible, de l'UE, recevoir, en provenance de la station de base cible, un message de rapport de transfert intercellulaire comprenant les informations de mobilité et un identifiant temporaire de réseau radio-cellulaire (C-RNTI) de l'UE dans une cellule source utilisée pour identifier l'UE, et identifier un contexte d'UE sur la base du C-RNTI de l'UE dans la cellule source et des informations sur l'échec de transfert intercellulaire au niveau de la station de base cible sur la base des informations de mobilité,
ladite station de base connectée à l'UE étant configurée pour transmettre un message d'indication de défaillance de liaison radio (RLF) à la station de base cible (1104),
ledit UE étant configuré pour transmettre un rapport RLF à la station de base connectée à l'UE (1103), et
ledit rapport RLF comprenant des informations temporelles indiquant un temps écoulé depuis l'échec de transfert intercellulaire jusqu'au signalement du rapport RLF.

7. Système selon la revendication 6, ledit message d'indication de RLF comprenant le rapport RLF qui est transmis depuis l'UE (1103).

8. Système selon la revendication 6, ledit rapport RLF comprenant en outre un C-RNTI de ladite une dernière cellule de desserte.

9. Système selon la revendication 6, ledit message de demande de transfert intercellulaire comprenant en outre le C-RNTI de l'UE de la cellule source.

10. Système selon la revendication 6, ledit message de rapport de transfert intercellulaire comprenant en outre un type d'échec de transfert intercellulaire qui est l'un d'un transfert intercellulaire trop précoce ou d'un transfert intercellulaire à la mauvaise cellule.

11. Système permettant de détecter une cause d'échec de transmission intercellulaire au niveau d'une station de base cible, le système comprenant : une station de base source ; la station de base cible ; un équipement utilisateur (UE) ; et une station de base connectée à l'UE après l'échec de transfert intercellulaire au niveau de la station de base cible, ladite station de base cible comprenant :
une unité de communication de données configurée pour envoyer et recevoir des données ; et
une unité de commande configurée pour commander l'unité de communication de données pour recevoir, en provenance de la station de base source, un message de demande de transfert intercellulaire comprenant des informations de mobilité, qui est associé à un transfert intercellulaire et fourni pour permettre une analyse des conditions qui conduisent à l'échec de transfert intercellulaire au niveau de la station de base cible, de l'UE,
recevoir un message d'indication de défaillance de liaison radio (RLF) en provenance de la station de base connectée à l'UE, et
transmettre, à la station de base source, un rapport de transfert intercellulaire comprenant les informations de mobilité et un identifiant temporaire de réseau radio-cellulaire (C-RNTI) de l'UE dans une cellule source utilisée pour identifier l'UE,
ladite station de base source étant configurée pour identifier un contexte d'UE sur la base du C-RNTI de l'UE dans la cellule source et des informations sur l'échec de transfert intercellulaire au niveau de la station de base cible sur la base des informations de mobilité,
ledit UE étant configuré pour transmettre un rapport RLF à la station de base connectée à l'UE, et
ledit rapport RLF comprenant des informations temporelles indiquant un temps écoulé depuis l'échec de transfert intercellulaire jusqu'au signalement du rapport RLF.

12. Système selon la revendication 11, ledit message d'indication de RLF comprenant le rapport RLF qui est transmis depuis l'UE (1103).

13. Système selon la revendication 11, ledit rapport RLF comprenant en outre un C-RNTI de l'UE dans une dernière cellule de desserte.

14. Système selon la revendication 11, ledit message de demande de transfert intercellulaire comprenant en outre le C-RNTI de l'UE dans la cellule source.

15. Système selon la revendication 11, ledit message de rapport de transfert intercellulaire comprenant en outre un type d'échec de transfert intercellulaire qui est l'un d'un transfert intercellulaire trop précoce et d'un transfert intercellulaire à la mauvaise cellule.
